# EUROPÄISCHE PATENTANMELDUNG

(11) **EP 3 203 647 A1**
(43) Veröffentlichungstag der Anmeldung: **09.08.2017**
(21) Anmeldenummer: 16154671.8
(22) Anmeldetag: 08.02.2016
(51) Int. Cl.: H04B 5/00, G08C 17/00

(54) **ÜBERTRAGUNG VON DATEN UND BEREITSTELLUNG ELEKTRISCHER ENERGIE**

(71) Anmelder: Siemens Aktiengesellschaft, 80333 München (DE)
(72) Erfinder: Sykosch, Ralf, 91365 Weilersbach (DE); Deicke, Matthias, 31311 Uetze / Schwüblingsen (DE)

(57) **Zusammenfassung**

Die Erfindung betrifft eine Vorrichtung (1) zur Übertragung von Daten (DATA) von einer rotierenden Welle (10) hin zu einem Feststehenden Teil (20) sowie zur Bereitstellung von elektrischer Energie (EEL) in oder an der rotierenden Welle (10). Weiterhin betrifft die Erfindung ein Getriebe, einen Motor oder Generator und eine Windkraftanlage mit einer erfindungsgemäßen Vorrichtung. Um eine Vorrichtung (1) bereitzustellen, die es ermöglicht Daten (DATA) kontaktlos von einer rotierenden Welle (10) hin zu einem feststehenden Teil (20) zu übertragen und elektrische Energie (EEL) kontaktlos in oder an der rotierenden Welle (10) bereitzustellen, die weiterhin eine kompakte Form und eine einfache Integrierbarkeit aufweist, weist die Vorrichtung (1) eine Datenübertragungsvorrichtung (D) auf, die zum kontaktlosen Übertragen der Daten (DATA) von einer rotierenden Welle (10) zu einem feststehenden Teil (20) und/oder in entgegengesetzte Richtung ausgebildet ist. Des Weiteren weist die Vorrichtung (1) eine Energieübertragungsvorrichtung (E) auf, die zum kontaktlosen Bereitstellen von elektrischer Energie (EEL) in und/oder an der rotierenden Welle (10) ausgebildet ist. Dazu weisen die Datenübertragungsvorrichtung (D) und die Energieübertragungsvorrichtung (E) jeweils einen mit der Welle (10) mitrotierenden Teil (EROT, DROT) und einen zumindest bezüglich der Welle (10) feststehenden Teil (EFIX, DFIX) auf. Die Vorrichtung (1) ist dabei besonders vorteilhaft zumindest zur teilweisen Integration in die Welle (10) ausgebildet.

## Beschreibung

Die Erfindung betrifft eine Vorrichtung zur Übertragung von Daten sowie zur Bereitstellung von elektrischer Energie in oder an einer rotierenden Welle. Weiterhin betrifft die Erfindung ein Getriebe und einen Motor oder Generator. Des Weiteren betrifft die Erfindung die Anwendung der erfindungsgemäßen Vorrichtung in einer industriellen Anlage und einer Windkraftanlage.

Mit zunehmender Vernetzung aller in der Industrie und im energieerzeugenden Bereich eingesetzten Technologien wird es immer wichtiger auch intelligente Motoren/Generatoren und sogar Getriebe anzubieten. Eine derartige Vorrichtung kommt beispielsweise in Antrieben, Generatoren oder Getrieben in der Industrie oder in Generatoren und Getrieben in der Energieerzeugung zum Einsatz.

Soll nun beispielsweise eine Messvorrichtung innerhalb eines Getriebes eingebracht werden, so stellt die Versorgung der Messvorrichtung mit Energie und das Übertragen der Messdaten eine Herausforderung dar.

Aus WO 1998/052350 ist ein Koppler zum Übertragen von Signalen über ein rotierendes Interface bekannt. Der Koppler weist dazu eine erste und eine zweite magnetische Spule sowie eine erste und eine zweite optische Signalübertragungsvorrichtung auf. Die erste und die zweite magnetische Spule sind dabei induktiv gekoppelt um elektrische Energie über das rotierende Interface zu übertragen. Die erste und die zweite optische Signalübertragungsvorrichtung sind weiterhin zur Übertragung eines optischen Signals optisch gekoppelt. Das rotierende Interface ist zur Anwendung bei einem Stativ für eine Videokamera geeignet. Ein solcher Koppler ermöglicht lediglich das Übertragen von Energie und Daten über ein rotierendes Interface. Für den Einsatz in oder an einer drehmomentübertragenden Welle eines Getriebes ist es nicht geeignet.

Die Aufgabe der Erfindung ist es, eine Vorrichtung bereitzustellen, die es ermöglicht Daten kontaktlos von einer rotierenden Welle hin zu einem feststehenden Teil zu übertragen und elektrische Energie kontaktlos in oder an der rotierenden Welle bereitzustellen. Eine kompakte Form und eine einfache Integrierbarkeit sind ebenfalls wünschenswert.

Zur Lösung dieser Aufgabe weist die Vorrichtung eine Datenübertragungsvorrichtung auf, die zum kontaktlosen Übertragen der Daten von einer rotierenden Welle zu einem feststehenden Teil und/oder in entgegengesetzte Richtung ausgebildet ist. Des Weiteren weist die Vorrichtung eine Energieübertragungsvorrichtung auf, die zum kontaktlosen Bereitstellen von elektrischer Energie in und/oder an der rotierenden Welle ausgebildet ist. Dazu weisen die Datenübertragungsvorrichtung und die Energieübertragungsvorrichtung jeweils einen mit der Welle mitrotierenden Teil und einen zumindest bezüglich der Welle feststehenden Teil auf. Die Vorrichtung ist dabei besonders vorteilhaft zumindest zur teilweisen Integration in die Welle ausgebildet.

Die Vorrichtung kann ebenfalls zum Erfassen der Daten ausgebildet sein. Dies kann durch ein Erfassen von Messwerten von an der Vorrichtung angeschlossenen oder sogar direkt auf der Vorrichtung angebrachten Sensoren sein. Beim Erfassen kann es sich allerdings auch um ein Umsetzen von Daten oder Messdaten in eine von der Vorrichtung übertragbare Form, beispielsweise Analog-Digital-Wandeln, handeln. Diese Daten können dann beispielsweise von Steuerungs- oder Regelungskomponenten weiter verwendet werden.

Die zu übertragenden Daten können dabei Messdaten sein, wie Drehmomente, Kräfte, Drehzahlen, Temperaturen und weitere Daten oder Statusinformationen. Hierzu können technische und technologische von den technischen Größen abgeleitete Daten zählen. Auch Steueranweisungen und Regelungsparameter sind übertragbar. Weiterhin denkbar sind Daten zur Winkelbeschleunigung der Welle, Druck und Zugkräfte die durch dehnende und stauchende Verformungen entstehen und beispielsweise mit Dehnungsmessstreifen erfasst werden können. Die an der Welle anliegende Leistung könnte bereits in der Vorrichtung erfasst und aus der Drehzahl und dem anliegenden Drehmoment errechnet werden.

Feststehend soll dabei lediglich bezüglich der rotierenden Welle feststehend bedeuten. Wird ein derartiges System also beispielsweise in ein Fahrzeug oder eine drehbare Kanzel eines Windrades eingebaut, so kann zwar das gesamte Fahrzeug oder die Kanzel beweglich sein, der feststehende Teil rotiert/bewegt sich aber bezüglich der Welle nicht.

Eine Welle kann dabei eine Antriebswelle sein. Dabei kann es sich beispielsweise um die Welle eines Elektromotors oder - generators handeln. Es ist aber ebenso denkbar, dass die Welle direkt als ein Getriebezahnrad oder als andere bekannte mechanische und wellenähnliche Bauelemente in Getrieben ausgebildet ist. Weiterhin sind Getriebe-Wellen, Getriebe mit mindestens einer Stirnradeinheit, Rollen oder Walzen denkbar. Die Welle ist dabei zur Übertragung von Drehmomenten geeignet. Das heißt zumindest ein Teil der Betriebszustände betreffen die Welle im mit Drehmoment belasteten Zustand. Damit grenzt sich die Erfindung deutlich von rein rotierenden Schnittstellen ab, die zwar Daten und/oder Energie übertragen, aber kein Drehmoment führen.

Eine teilweise Integration kann dabei bei einer Hohlwelle bedeuten, dass die Vorrichtung großteils in dieser Hohlwelle angeordnet ist. Bei einer Vollwelle ist es denkbar, dass eine Sacklochbohrung axial in die Welle eingebracht wird und ein Teil der Vorrichtung in dieser Sacklochbohrung angeordnet wird. Dies ist besonders platzsparend, effizient und auch bei bestehenden Systemen einfach nachrüstbar.

Die vorliegende Erfindung ermöglicht somit eine Miniaturisierung und Erhöhung der Integrationsdichte eines Systems zur Übertragung von Daten und Bereitstellung von elektrischer Leistung in oder an einer rotierenden Welle. Sowohl die Energieübertragungsvorrichtung als auch die Datenübertragungsvorrichtung sind dabei zur kontaktlosen Übertragung von Energie und/oder Daten ausgebildet.

In einer weiteren vorteilhaften Ausführungsform ist die Energieübertragungsvorrichtung als induktive Übertragungsvorrichtung ausgebildet. Induktive Energieübertragungssysteme haben den Vorteil, dass sie ohne elektrischen Kontakt arbeiten. Mit den mittlerweile bekannten Resonanzwandlern zur drahtlosen Energieübertragung ist die Effizienz der induktiven Energie-übertrager auf einem hervorragenden Niveau angelangt. Im vorliegenden Fall muss allerdings zusätzlich die Energie von einem rotierenden Teil zu einem feststehenden Teil übertragen werden. Daher ist eine Abstimmung der beiden dazu nötigen Übertragerspulen notwendig. Bei den Übertragerspulen kann es sich beispielsweise um je eine zirkulare Spule handeln, die auf einem Spulenkörper montiert oder gewickelt wird und wobei der Spulenkörper dann mit einem Schalenkern versehen wird. Faktoren, die dabei die Energieübertragung beeinflussen, sind beispielsweise die Größe der Übertragerspulen, die Drahtstärke des verwendeten Spulendrahtes, die Windungszahl der Spule und natürlich der Platz in oder an der Welle, der für die Übertragerspule/n zur Verfügung steht. Die Ansteuerungselektronik kann direkt an den Spulen als eine Platine ausgeführt sein. Auf der feststehenden Seite wird die entsprechend nötige Wechselspannung mit der entsprechenden Übertragungsfrequenz erzeugt. Auf der rotierenden Seite koppelt das so erzeugte elektromagnetische Wechselfeld in die rotierende Spule ein und kann dann gleichgerichtet und für weitere Zwecke verwendet werden. Eine resonante induktive Energieübertragung ist hier wünschenswert.

In einer weiteren vorteilhaften Ausführungsform ist die Datenübertragungsvorrichtung als optische Übertragungsvorrichtung ausgebildet. Eine optische Übertragungsvorrichtung hat den großen Vorteil, dass sie unempfindlich gegenüber Störungen elektrischer Natur ist, wie sie bei der elektrischen Energieübertragung und/oder weiterer elektrischer Komponenten, wie Motoren, Generatoren oder Umrichter, auftreten können. Die optische Übertragungsvorrichtung kann beispielsweise eine Datenübertragung mittels infraroten Lichts sein. IR-Übertragungsbausteine zeichnen sich durch eine hohe und preislich attraktive Verfügbarkeit aus, sind unempfindlich und ermöglichen ausreichend hohe Datenübertragungsraten. Weiterhin denkbar sind Verfahren über einen Luftspalt zwischen zwei optischen Fasern und/oder Verfahren die auf Laser basieren. All diese Verfahren zeichnen sich dadurch aus, dass sie ohne Einbußen an Übertragungsqualität kontaktlos ausgeführt werden können. Die Ansteuerungselektronik für die optische Datenübertragungsvorrichtung kann dabei ebenso auf einer Platine direkt am Sender bzw. Empfänger implementiert sein. Dies ist nicht nur platzsparend, sondern auch effizient möglich.

In einer weiteren vorteilhaften Ausführungsform ist zumindest einer der mit der Welle mitrotierenden Teile zumindest zum teilweisen radialen Einbringen in die Welle ausgebildet. In dieser Ausführungsform ist es möglich die mitrotierenden Teile in eine Radialbohrung in die Welle einzubringen. Dies hat den Vorteil, dass potenziell außerhalb der Welle liegende Sensoren einfach kontaktiert werden können. Es ist hier sowohl eine durchgängige Bohrung durch die ganze Welle als auch eine radiale Sacklochbohrung denkbar. In radiale Bohrungen können beispielsweise mittels eines Gewindes der mitrotierende Teil der Daten- und/oder Energieübertragungsvorrichtung eingeschraubt werden. Dies hat den besonderen Vorteil, dass ein Montieren besonders einfach möglich ist. Sollen nun beispielsweise im Rotor eines Generators oder Motors Daten erfasst werden, bietet sich damit der optimale Ausgangspunkt um aus der Welle heraus in den Rotor hinein Sensoren zu kontaktieren. Auch eine Dehnungsmessung mittels Dehnungsmessstreifen an weiter außerhalb der Welle liegenden Punkten ist so denkbar.

In einer weiteren vorteilhaften Ausführungsform ist zumindest einer der mit der Welle mitrotierenden Teile zumindest zum teilweisen axialen Einbringen in die Welle ausgebildet. Diese Ausführungsform ist besonders dann von Vorteil, wenn die Welle aus Gründen der Belastbarkeit nicht mit radialen sondern lediglich mit einer axialen Bohrung versehen werden kann. In diese axiale Bohrung werden die Sensoren und zumindest ein Teil des mitrotierenden Teils eingefügt. Dies ist beispielsweise bei Getrieben denkbar, in denen entweder im Inneren der Welle Drehmomente gemessen werden oder nur kleine Radialbohrungen an die Oberfläche der Welle zur Durchführung von Kontaktierungsleitungen, beispielsweise für Dehnungsmessstreifen, zulässig sind.

In einer weiteren vorteilhaften Ausführungsform ist die Energieübertragungsvorrichtung ausschließlich zur Bereitstellung der elektrischen Energie, die zum Erzeugen und Übertragen der Daten nötig ist, ausgebildet. Diese Ausführungsform ist insbesondere dann von Vorteil, wenn aufgrund der räumlichen Gegebenheiten nur wenig Bauraum vorhanden ist. Selbstverständlich ist bei anderen Ausführungsformen eine Auslegung der Energieübertragung auf die auf der rotierenden Seite notwendige Energie wünschenswert. Ist allerdings eine derart kompakte Integration in die Welle gewünscht, so ist es denkbar, dass die elektrische Energie, die von der Energieübertragungsvorrichtung zur Verfügung gestellt wird, gerade so dimensioniert wird, dass sie ausschließlich für die Erzeugung und Übertragung der Daten ausreicht. Dazu werden Messspannungen zur Verfügung gestellt sowie die Wandlung in ein übertragbares Signal durchgeführt. Weiterhin ist denkbar, die Messung der Daten zeitlich von der Übertragung der Daten getrennt wird und auf diese Weise nur Energie für den jeweils größeren Verbraucher und nicht die Summe der beiden bereitgestellt werden muss.

In einer weiteren vorteilhaften Ausführungsform ist zumindest einer der mit der Welle mitrotierenden Teile der Datenübertragungsvorrichtung und/oder der Energieübertragungsvorrichtung zur vollständigen Integration in die Welle ausgebildet. Sind die Platzverhältnisse außerhalb der Welle beengt oder ergeben sich andere Indikationen, so ist es wünschenswert, zumindest die mitrotierenden Teile der Datenübertragungsvorrichtung und/oder der Energieübertragungsvorrichtung vollständig in die Welle zu integrieren. Dies hat den Nebeneffekt, dass Komponenten, die innerhalb der Welle eingebracht sind, vor äußeren Einflüssen geschützt sind.

In einer weiteren vorteilhaften Ausführungsform ist die Datenübertragungsvorrichtung in die Energieübertragungsvorrichtung integriert. Eine Integration der Datenübertragungsvorrichtung in die Energieübertragungsvorrichtung ermöglicht ein effizientes Design der gesamten Vorrichtung. Dazu können jeweils die mit der Welle mitrotierenden Teile der Datenüberragungsvorrichtung in die mit der Welle mitrotierenden Teile der Energieübertragungsvorrichtung eingebracht werden. Dies wird beispielsweise bei einem induktiven Übertrager derart realisiert, dass ein optischer Übertrager ins Zentrum einer zirkularen Spule eingebracht wird und von dort aus an ein ebenso ausgebildetes feststehendes Modul Daten überträgt. Zwischen den mitrotierenden Teilen und den feststehenden Teilen besteht auch bei einer Integration der Datenübertragungsvorrichtung in die Energieübertragungsvorrichtung ein entsprechender Luftspalt, über den eine reibungsfreie Übertragung von sowohl Energie als auch Daten ermöglicht wird.

In einer weiteren vorteilhaften Ausführungsform ist die Energieübertragungsvorrichtung zur Übertragung von weiteren Daten ausgebildet. Insbesondere ist die Energieübertragungsvorrichtung zur Übertragung von weiteren Daten mit einer geringeren Bandbreite als die Daten, die über die Datenübertragungsvorrichtung übertragen werden, ausgebildet. Wenn die Energieübertragungsvorrichtung als induktive Übertragungsvorrichtung ausgebildet ist, so ist es möglich, auf das Energiesignal, das eine entsprechend hochfrequente Wechselspannung darstellt, ein weiteres Datensignal aufzumodulieren, das für die Übertragung weiterer Daten verwendet werden kann. So ist es möglich, einen zweiten unabhängigen Kanal zur Datenübertragungsvorrichtung zu schaffen und damit beispielsweise einfachere Statusinformationen zu übertragen. Der so entstehende zweite Kommunikationskanal kann für das Erreichen von höheren Sicherheitslevels durch Herstellen einer Redundanz verwendet werden. Ebenso ist denkbar, dass die Übertragung in Richtung feststehendem Teil rein optisch mittels der Datenübertragungsvorrichtung durchgeführt wird und Übertragungen in Richtung des rotierenden Teils rein induktiv mittels der Energieübertragungsvorrichtung durchgeführt wird.

In einer weiteren vorteilhaften Ausführungsform weist die Vorrichtung eine Einstellvorrichtung zur Einstellung eines Luftspalts der Energieübertragungsvorrichtung und/oder der Datenübertragungsvorrichtung auf. Bei der Fertigung der vorliegenden Vorrichtung treten fertigungsbedingte Toleranzen auf. Um eine möglichst günstige Fertigung zu ermöglichen kann eine Einstellvorrichtung für den kritischen Luftspalt vorgesehen werden und so höhere Toleranzen der Fertigung toleriert werden. Hier ist es beispielsweise denkbar, dass eine rohrförmige Hülse mit ausreichender Wandstärke mit zwei in axialer Richtung angebrachte Bohrungen vorgesehen wird. Die Hülse dient erstens der Verdrehsicherung des jeweiligen Teils und ermöglicht zweitens durch Verwendung von Gewindestiften eine Feinjustage des Luftspalts zwischen dem mitrotierenden und dem feststehenden Teil. Die Einstellvorrichtung ist dabei, je nach Ausführungsform, dem feststehenden Teil oder dem mitrotierenden Teil zugeordnet und befindet sich in der Regel nicht im Luftspalt, sondern bewegt den jeweiligen Teil zur Vergrößerung oder Verkleinerung des Luftspalts.

In einer weiteren vorteilhaften Ausführungsform ist der feststehende Teil zur Kommunikation in einem Cyber-physischen System ausgebildet. Ein Cyber-physisches System bezeichnet den Verbund informatischer und/oder softwaretechnischer Komponenten mit mechanischen und elektronischen Teilen, die über eine Dateninfrastruktur, wie z. B. das Internet oder ein über mehrere Standorte verknüpftes Firmennetzwerk, kommunizieren.

Mit den mittlerweile aufkommenden Cyber-physischen Systemen ist eine Vorrichtung mit erweiterten kommunikationsfähigen notwendig. Denkbar ist, dass die Daten, die über die Vorrichtung vom rotierenden an den feststehenden Teil übertragen werden, gleich vom feststehenden Teil weitergegeben werden und z.B. in einem zentralen Rechensystem fernab der Vorrichtung verarbeitet werden. Die Vorrichtung kann dazu z.B. um einen Bus oder direkt um einen Netzwerkanschluss erweitert werden. Bei Windkraftanlagen ist eine derartige Kommunikationsfähigkeit von Vorteil, da hier oft große Distanzen überbrückt werden müssen. Mit dieser Ausführungsform lässt sich also die vorliegende Vorrichtung einfach an die Bedürfnisse von Industrie 4.0 anpassen und ebenso effizient in moderne Kommunikationssysteme einbinden.

In einer weiteren vorteilhaften Ausführungsform weist die Datenübertragungsvorrichtung jeweils beidseitig einen Sender und einen Empfänger auf. Diese Ausführungsform ist insbesondere dann von Vorteil, wenn es nötig ist hohe Datenraten in beide Richtungen zu übertragen, d.h. wenn beispielsweise Stellantriebe im rotierenden Teil angesteuert und Rückmeldung in Echtzeit gegeben werden soll. Dies ist beispielsweise bei Pitch-Drives von Windkraftanlagen der Fall.

Die erfindungsgemäße Vorrichtung kommt vorteilhaft in einem Getriebe, das mindestens eine Getriebewelle und eine erfindungsgemäße Vorrichtung aufweist zum Einsatz. Auch ein Motor oder ein Generator, der mindestens eine Motor-/Generatorwelle und eine erfindungsgemäße Vorrichtung aufweist ist denkbar. Im industriellen Umfeld können industrielle Anlagen mit der Erfindungsgemäßen Vorrichtung ausgerüstet werden und es ergeben sich so neue Möglichkeiten der Regelung, Steuerung und Überwachung von drehenden Maschinen. Eine Windkraftanlage aufweisend mindestens ein Getriebe oder einen Motor/Generator mit einer erfindungsgemäßen Vorrichtung ist eine vorteilhafte Anwendung der vorliegenden Erfindung.

Im Folgenden wird die Erfindung anhand der in den Figuren dargestellten Ausführungsbeispiele näher beschrieben und erläutert. Es zeigen:
- FIG 1: eine schematische Darstellung einer Vorrichtung für Daten- und Energieübertragung,
- FIG 2: eine Ausführungsform einer derartigen Vorrichtung,
- FIG 3: eine weitere Ausführungsform einer derartigen Vorrichtung, wobei der mitrotierende Teil radial in die Welle integriert ist und
- FIG 4: eine derartige Vorrichtung mit Einstellvorrichtung.

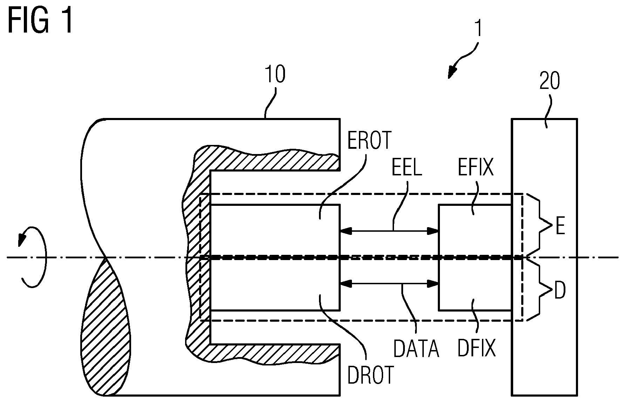

FIG 1 zeigt ganz allgemein ein Blockschaltbild einer Vorrichtung 1 für Daten- und Energieübertragung. Dargestellt ist eine Welle 10, die um ihre Achse rotieren, Drehmoment übertragen und beispielsweise zum Antrieb von Maschinen verwendet werden kann. Es ist ebenso denkbar, dass die Welle 10 Bestandteil eines Generators oder eines Getriebes ist. Gegenüber der Welle befindet sich ein bezüglich der Welle 10 feststehender Teil 20. Zwischen der Welle 10 und dem feststehenden Teil 20 befindet sich jeweils eine Datenübertragungsvorrichtung D und eine Energieübertragungsvorrichtung E, die jeweils zur Übertragung von Daten DATA und elektrischer Energie EEL ausgebildet sind. Die Energieübertragungsvorrichtung E ist dabei in zwei Blöcke aufgeteilt. Der erste Block beschreibt den mit der Welle 10 mitrotierenden Teil EROT der Energieübertragungsvorrichtung E, der zweite Teil beschreibt den bezüglich der Welle 10 feststehenden Teil EFIX der Energieübertragungsvorrichtung E. Analog beschreiben der mit der Welle 10 mitrotierende Teil DROT und der bezüglich der Welle 10 feststehende Teil DFIX die funktionalen Blöcke der Datenübertragungsvorrichtung D. Die Anordnung der Blöcke EROT, EFIX, DROT, DFIX ist dabei lediglich als funktionale Darstellung zu verstehen, nicht als mechanisch korrekte Anordnung.

Die von der feststehenden Seite der Energieübertragungsvorrichtung E übertragene elektrische Energie EEL wird von der rotierenden Seite EROT empfangen und kann somit in oder an der rotierenden Welle 10 für weitere Zwecke verwendet werden. Zum Beispiel könnten hier nicht gezeigte Sensoren mit der elektrischen Energie EEL versorgt werden. Deren Messwerte würden über den ebenfalls mit der elektrischen Energie EEL versorgten rotierenden Teil DROT der Datenübertragungsvorrichtung D in Richtung feststehendem Teil 20 übertragen werden. Eine Energieübertragung von der Welle 10 in Richtung des feststehenden Teils 20 ist hier zwar durch den beidseitigen Pfeil angedeutet, soll aber im Folgenden nicht detailliert betrachtet werden.

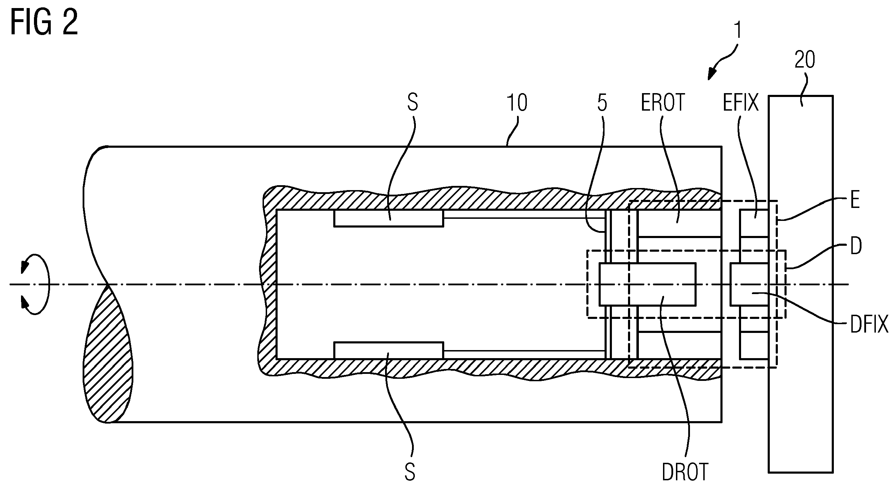

FIG 2 zeigt eine Ausführungsform der Vorrichtung 1 unter Beibehaltung der Bezugszeichen aus FIG 1. Die Anordnung der bezüglich der Welle 10 feststehenden Teile EFIX, DFIX am feststehenden Teil 20 ist hier bereits so ausgeführt, dass der feststehenden Teil der Datenübertragungsvorrichtung DFIX sich innerhalb des feststehenden Teils der Energieübertragungsvorrichtung EFIX befindet. Diese Ausführungsform ist nicht nur platzsparend, sondern ermöglicht es auch, die beiden Komponenten EFIX, DFIX so anzuordnen, dass überhaupt eine Übertragung von Daten und Energie in zwischen dem feststehenden Teil 20 und der Welle 10 möglich ist. Auf der rotierenden Seite, also innerhalb der Welle 10, ist eine Sacklochbohrung zu sehen, in die der rotierende Teil EROT der Energieübertragungsvorrichtung E und der rotierende Teil DROT der Datenübertragungsvorrichtung D eingebracht ist. Eine Ansteuerelektronik 5 dient zur gleichzeitigen mechanischen Befestigung des mitrotierenden Teils DROT der Datenübertragungsvorrichtung D sowie zur Ansteuerung von zwei Sensoren S, die innerhalb der Welle 10 angeordnet sind. Die Ansteuerelektronik kann dabei sowohl Analog-Digital-Wandler zum Wandeln der Sensorsignale als auch entsprechende Signalwandler für die Datenübertragungsvorrichtung D enthalten. Des Weiteren kann die Ansteuerelektronik 5 auch entsprechende Spannungswandler zum Bereitstellen der Energie der Energieübertragungsvorrichtung E aufweisen. Die hier gezeigte Anordnung ist insbesondere für Systeme von Vorteil, die ein freistehendes Wellenende aufweisen, in das eine Sacklockbohrung eingebracht werden kann. Alternativ kommen hier auch Hohlwellen in Frage. So kann die Vorrichtung auf einfache Art und Weise nachgerüstet und einfach angebracht werden. Besonders vorteilhaft ist allerdings die Tatsache, dass ein derartiges System besonders gut miniaturisiert werden kann. Ebenso ist von Vorteil, dass keine rotierenden Akkus oder separate Energiespeicher notwendig sind, wie sie bei bisher bekannten Systemen nötig sind. Ein Beispiel für eine Anwendung könnte sich wie folgt ergeben. Der Sensor S liefert die Drehzahl und/oder das Drehmoment der Welle 10, wobei die Welle mit einem nicht gezeigten Getriebe kombiniert ist. Über die Vorrichtung 1 könnte dann der Ansteuerelektronik 5 mitgeteilt werden mit welchem Übersetzungsverhältnis das Getriebe derzeit arbeitet. In der Ansteuerelektronik 5 könnte dann die Drehzahl, das Drehmoment direkt an der Welle 10 und die Abtriebsdrehzahl sowie das Abtriebsdrehmoment des Getriebes berechnet und ausgegeben werden. Diese intelligente Bereitstellung von Messwerten ist besonders vorteilhaft.

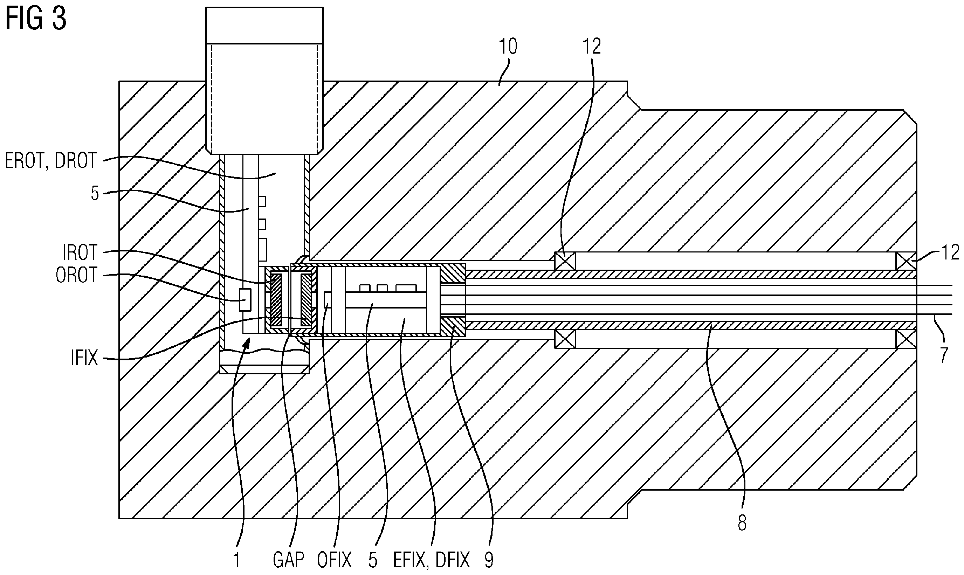

FIG 3 zeigt eine Ausführungsform der Vorrichtung 1, bei der die mit der Welle 10 mitrotierenden Teile EROT, DROT, in eine radiale Bohrung in die Welle 10 eingebracht werden. In diesem Fall geht die radiale Bohrung lediglich etwas über die Drehachse der Welle 10 hinaus. Bei Anwendungen, die empfindlich gegenüber Unwuchten mit niedriger Amplitude sind, ist es denkbar, dass die radiale Bohrung komplett durch die Welle hindurchgeht um eine symmetrische Anordnung bzgl. der Drehachse zu erreichen. Die mit der Welle 10 mitrotierenden Teile EROT, DROT der Vorrichtung 1 könnten dann symmetrisch bezüglich der Drehachse der Welle 10 verteilt werden, um mögliche Vibrationen durch Unwucht so gering wie möglich zu halten. Da die Komponenten der Vorrichtung klein und leicht ausführbar sind, ist es möglich, auch eine asymmetrische Radialbohrung zu verwenden und die in FIG 3 gezeigte Ausführungsform in eine Welle 10 zu integrieren.

FIG 3 zeigt weiterhin einen feststehenden Teil EFIX, DFIX, der komplett in der Welle 10 eingebracht ist. Um Berührungen des bezüglich der Welle 10 feststehenden Teils EFIX, DFIX mit der Welle 10 zu verhindern, sind Hülsen 8 und 9 vorgesehen. Die Hülse 8 enthält Leitungen 7, die zur elektrischen und datentechnischen Versorgung des bezüglich der Welle 10 feststehenden Teils EFIX, DFIX vorgesehen sind. Die Ansteuerelektronik 5 befindet sich innerhalb einer Hülse 9. Die Hülsen 8, 9 können aber ebenso als ein Teil gefertigt werden. Hier sind vor allem Kunststoffspritzgussteile von Vorteil. Die Hülse 8 ist mit Lagern 12 von der rotierenden Welle abgestützt. So kann garantiert werden, dass die Vorrichtung 1 ausreichend steif ist. Die Hülsen 8, 9 könnten auch aus verstärktem Kunststoff, insbesondere faserverstärktem Kunststoff gefertigt werden, da dieser eine noch höhere Steifigkeit besitzt. So kann verhindert werden, dass es zu unerwünschtem Kontakt zwischen den feststehenden Hülsen 8,9 und der rotierenden Welle 10 kommt.

Zur Energieübertragung ist in FIG 3 eine induktive Energieübertragungsvorrichtung IFIX, IROT zu sehen. Dabei handelt es sich um jeweils einen Schalenkern, beispielsweise aus Ferrit, einen Spulenkörper, der beispielsweise aus Kunststoff gefertigt ist, sowie eine darin enthaltene Spule. Zwischen diesen beiden Spulen befindet sich ein Luftspalt GAP. Im Zentrum der Spuleneinheiten, die jeweils zu einem der beiden induktiven Übertrager IFIX, IROT gehören, befindet sich eine optische Übertragungsvorrichtung OROT, OFIX. Der rotierende Teil OROT der optischen Übertragungsvorrichtung OROT, OFIX könnte dabei als eine LED- oder als eine Laserdiode ausgebildet sein. Der feststehende Teil OFIX der optischen Datenübertragungsvorrichtung könnte weiterhin als Fototransistor ausgebildet sein und empfängt so die Daten von der rotierenden Seite. Zwischen den beiden optischen Komponenten OFIX, OROT besteht eine Sichtverbindung. Der Luftspalt GAP kann über eine so genannte Luftspalteinstellungseinheit eingestellt werden, die hier nicht näher gezeigt ist. Beispielsweise können hier über Gewindebohrungen der Abstand über entsprechende Schrauben variiert werden.

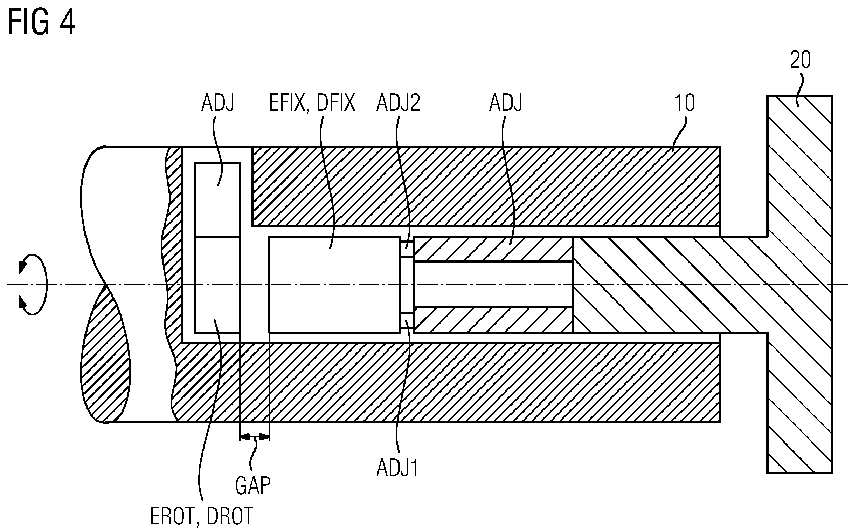

FIG 4 zeigt stark vereinfacht eine Welle 10 in der in einer Axialbohrung ein feststehender Teil 20 mit dessen feststehenden Übertragungsvorrichtungen EFIX, DFIX einer Energie- und Datenübertragungsvorrichtung angeordnet ist. Der feststehende Teil 20 soll hier lediglich stellvertretend für jegliche weitere Empfangs-/Auswerteelektronik stehen, die nicht mit der Welle 10 mitrotieren soll. Den Übertragungsvorrichtungen EFIX, DFIX des feststehenden Teils 20 ist eine Einstellvorrichtung ADJ mit zwei Stellmitteln ADJ1, ADJ2 zugeordnet. In einer Radialbohrung ist weiterhin ein mit der Welle 10 mitrotierender Teil EROT, DROT der Energie- und Datenübertragungsvorrichtung angeordnet, dem eine weitere Einstellvorrichtung ADJ angeordnet. Die Einstellvorrichtungen ADJ sind dabei zur Justage der Übertragungsvorrichtungen EFIX, DFIX, EROT, DROT in axialer bzw. radialer Richtung vorgesehen. So kann der Luftspalt GAP eingestellt und optimiert werden. Die Einstellmittel ADJ1, ADJ2 können dabei beispielsweise als Gewindestifte ausgebildet sein.

Zusammenfassend betrifft die Erfindung eine Vorrichtung 1 zur Übertragung von Daten DATA von einer rotierenden Welle 10 hin zu einem Feststehenden Teil 20 sowie zur Bereitstellung von elektrischer Energie EEL in oder an der rotierenden Welle 10. Weiterhin betrifft die Erfindung ein Getriebe, einen Motor oder Generator und eine Windkraftanlage mit einer erfindungsgemäßen Vorrichtung. Um eine Vorrichtung 1 bereitzustellen, die es ermöglicht Daten DATA kontaktlos von einer rotierenden Welle 10 hin zu einem feststehenden Teil 20 zu übertragen und elektrische Energie EEL kontaktlos in oder an der rotierenden Welle 10 bereitzustellen, die weiterhin eine kompakte Form und eine einfache Integrierbarkeit aufweist, weist die Vorrichtung 1 eine Datenübertragungsvorrichtung D auf, die zum kontaktlosen Übertragen der Daten DATA von einer rotierenden Welle 10 zu einem feststehenden Teil 20 und/oder in entgegengesetzte Richtung ausgebildet ist. Des Weiteren weist die Vorrichtung 1 eine Energieübertragungsvorrichtung E auf, die zum kontaktlosen Bereitstellen von elektrischer Energie EEL in und/oder an der rotierenden Welle 10 ausgebildet ist. Dazu weisen die Datenübertragungsvorrichtung D und die Energieübertragungsvorrichtung E jeweils einen mit der Welle 10 mitrotierenden Teil EROT, DROT und einen zumindest bezüglich der Welle 10 feststehenden Teil EFIX, DFIX auf. Die Vorrichtung 1 ist dabei besonders vorteilhaft zumindest zur teilweisen Integration in die Welle 10 ausgebildet.

## Patentansprüche

1. Vorrichtung (1) zur Übertragung von Daten (DATA) sowie zur Bereitstellung von elektrischer Energie (EEL), aufweisend:
• eine Datenübertragungsvorrichtung (D), die zum kontaktlosen Übertragen der Daten (DATA) von einer rotierenden Welle (10) zu einem feststehenden Teil (20) und/oder in entgegengesetzte Richtung ausgebildet ist und
• eine Energieübertragungsvorrichtung (E), die zum kontaktlosen Bereitstellen von elektrischer Energie (EEL) in und/oder an der rotierenden Welle (10) ausgebildet ist,
wobei die Datenübertragungsvorrichtung (D) und die Energieübertragungsvorrichtung (E) jeweils einen mit der Welle (10) mitrotierenden Teil (EROT, DROT) und einen zumindest bezüglich der Welle (10) feststehenden Teil (EFIX, DFIX) aufweisen und
wobei die Vorrichtung (1) zumindest zur teilweisen Integration in die Welle (10) ausgebildet ist.

2. Vorrichtung nach Anspruch 1, wobei die Energieübertragungsvorrichtung (E) als induktive Übertragungsvorrichtung ausgebildet ist.

3. Vorrichtung nach Anspruch 1 oder 2, wobei die Datenübertragungsvorrichtung (D) als optische Übertragungsvorrichtung ausgebildet ist.

4. Vorrichtung nach einem der vorhergehenden Ansprüche, wobei zumindest einer der mit der Welle (10) mitrotierenden Teile (EROT, DROT) zumindest zum teilweisen radialen Einbringen in die Welle (10) ausgebildet ist.

5. Vorrichtung nach einem der vorhergehenden Ansprüche, wobei zumindest einer der mit der Welle (10) mitrotierenden Teile (EROT, DROT) zumindest zum teilweisen axialen Einbringen in die Welle (10) ausgebildet ist.

6. Vorrichtung nach einem der vorhergehenden Ansprüche, wobei die Energieübertragungsvorrichtung (E) ausschließlich zur Bereitstellung der elektrischen Energie (EEL), die zum Erzeugen und Übertragen der Daten (DATA) nötig ist, ausgebildet ist.

7. Vorrichtung nach einem der vorhergehenden Ansprüche, wobei zumindest einer der mit der Welle (10) mitrotierenden Teile (EROT, DROT) der Datenübertragungsvorrichtung (D) und/oder der Energieübertragungsvorrichtung (E) zur vollständigen Integration in die Welle (10) ausgebildet ist.

8. Vorrichtung nach einem der vorhergehenden Ansprüche, wobei die Datenübertragungsvorrichtung (D) in die Energieübertragungsvorrichtung € integriert ist.

9. Vorrichtung nach einem der vorhergehenden Ansprüche, wobei die Energieübertragungsvorrichtung (E) zur Übertragung von weiteren Daten (DATA2) ausgebildet ist.

10. Vorrichtung nach einem der vorhergehenden Ansprüche, aufweisend eine Einstellvorrichtung (ADJ) zur Einstellung eines Luftspalts (GAP) der Energieübertragungsvorrichtung (E) und/oder der Datenübertragungsvorrichtung (D).

11. Vorrichtung nach einem der vorhergehenden Ansprüche, wobei der feststehende Teil (EFIX, DFIX) zur Kommunikation in einem Cyber-Physischen-System ausgebildet ist.

12. Vorrichtung nach einem der vorhergehenden Ansprüche, wobei die Datenübertragungsvorrichtung (D) jeweils beidseitig einen Sender und einen Empfänger aufweist.

13. Getriebe, das mindestens eine Getriebewelle und eine Vorrichtung (1) nach einem der Ansprüche 1 bis 12 aufweist.

14. Motor oder Generator, der mindestens eine Motor-/Generatorwelle und eine Vorrichtung (1) nach einem der Ansprüche 1 bis 12 aufweist.

15. Industrielle Anlage aufweisend einen Motor oder Generator nach Anspruch 14.

16. Windkraftanlage aufweisend mindestens ein Getriebe nach Anspruch 13 oder mindestens einen Generator nach Anspruch 14.
